# EUROPEAN PATENT SPECIFICATION

(11) **EP 0 716 535 B1**
(45) Date of publication and mention of the grant of the patent: **21.06.2000**
(21) Application number: 96100186.4
(22) Date of filing: 25.11.1991
(51) Int. Cl.: H04N 1/03

(54) **Image sensor and information processing apparatus**
Bildsensor und Informationsverarbeitungsgerät
Capteur d'images et appareil de traitement d'informations

(30) Priority: 26.11.1990 JP 32456290; 28.02.1991 JP 5561591; 14.06.1991 JP 16913491
(43) Date of publication of application: 12.06.1996
(62) Divisional of application: 91120087.1
(73) Proprietor: CANON KABUSHIKI KAISHA, Ohta-ku Tokyo 146-8501 (JP)
(72) Inventor: Ishizuka, Haruo, Ohta-ku, Tokyo 146 (JP)
(74) Representative: Pellmann, Hans-Bernd, Dipl.-Ing.

(56) References cited:
- EP-A- 0 294 834
- US-A- 4 783 700
- PATENT ABSTRACTS OF JAPAN vol. 14, no. 166 (E-911), 30 March 1990 & JP-A-02 022872 (KONICA CORP.), 25 January 1990,
- PATENT ABSTRACTS OF JAPAN vol. 12, no. 457 (E-688), 30 November 1988 & JP-A-63 182958 (MATSUSHITA ELECTRIC INDUSTRIAL CO. LTD.), 28 July 1988,
- PATENT ABSTRACTS OF JAPAN vol. 12, no. 124 (E-601), 16 April 1988 & JP-A-62 248365 (MATSUSHITA ELECTRIC INDUSTRIAL CO. LTD.), 29 October 1987,

## Description

The present invention relates to an information processing apparatus on which a contact type image sensor for use in an image reader, a facsimile machine or the like is mounted. More particularly, the present invention relates to an improvement in the composition of parts of the above-described contact type image sensor.

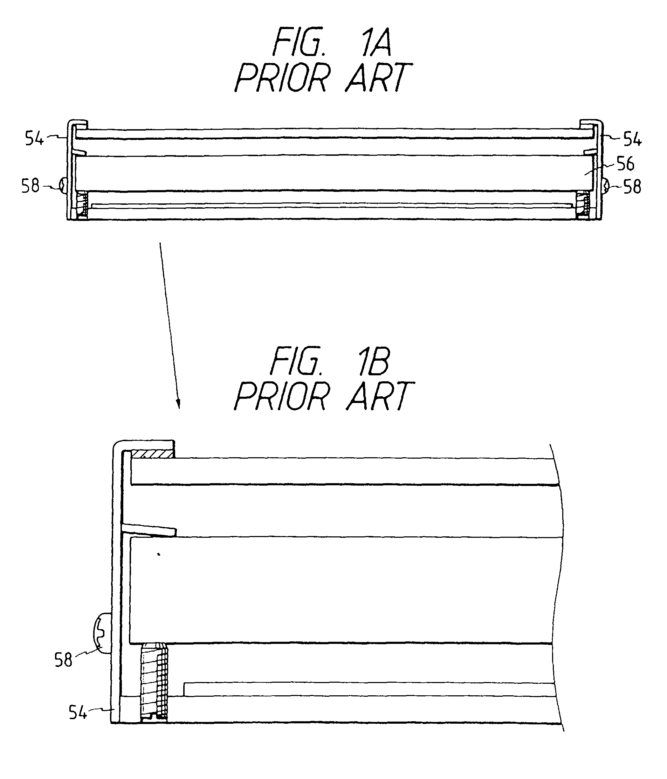

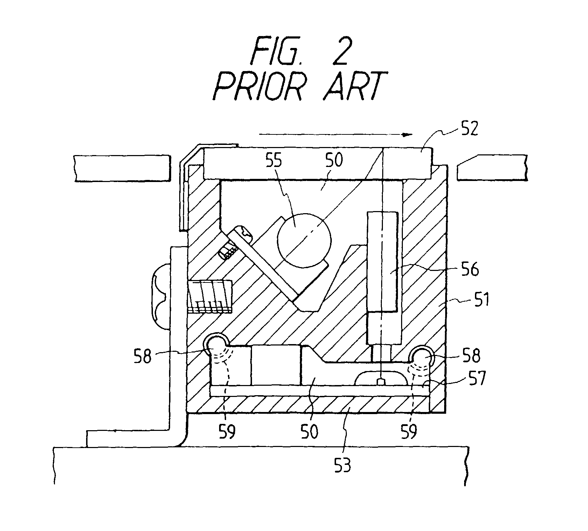

Fig. 1A is a schematic side elevational view which illustrates a conventional contact type image sensor. Fig. 1B is a partial enlarged view of the same. Fig. 2 is a schematic structural view which illustrates the image sensor mounted on the body of the apparatus. As shown in Figs. 1 and 2, the conventional contact type image sensor is arranged in such a manner that one hollow portion 50 is created by a frame 51, a reading glass 52, a bottom plate 53, side plates 54 and the like. Furthermore, optical elements, such as an LED array 55, a SELFOC lens 56 and a sensor substrate 57, are accommodated in the above-described hollow portion 50.

The oxidation and optically adverse influence upon the frame 51 have been prevented by applying a black insulating material to the surface of the frame 51 after the frame 51 has been formed into the final shape. Therefore, no electrical connection has been established between the above-described frame 51 and the bottom plate 53 and the side plates 54 which accommodate the optical elements.

As a result, although the above-described bottom plate 53 and the side plates 54 are disposed to surround the above-described frame 51, the force to shield electric waves becomes insufficient and an undesirable antenna effect is generated, causing the following problems to take place in a case where the contact type image sensor is, as described above, mounted on an apparatus such as an image reader.

That is, it is difficult, for the structure composed of the frame 51, the bottom plate 53 and the side plates 54 to confine the electric waves which have been generated in the sensor substrate 57 when the contact type image sensor is operated. As a result, the radiant noise characteristics will be deteriorated because the electric waves can easily leak outside. Because of the same reason, the force to shield the electric waves made incident from the external portion of the contact type image sensor is insufficient. Therefore, the contact type image sensor cannot be operated stably. In order to overcome the above-described problems, it might be feasible to employ a structure arranged in such a manner that a large quantity of the ground wires are used or an electric wave shield tape is used. However, the overall cost will be enlarged excessively in this case.

The above-described problems become more seriously in a case where the regulation of radiant noise, which has been intensified recently, must be met or when the apparatus is arranged to adapt to the electric waves the frequency of which has been raised or strengthened and to take a measurement against the deterioration in the resistance against external noise which will be taken place when the speed of the operational clock of the contact type image sensor is raised in order to improve the reading resolution and to raise the reading speed.

A conventional example of an image sensor unit is shown in US-A-4783700 which discloses an illumination means being held by a holding means wherein the holding means is caused by a mounting means to hold the illumination means so that the relative displacement between the illumination means and the holding means is held constant.

JP-A-02-022 872 discloses an optical sensor device having a substrate consisting of an iron sheet covered by an enamel layer on which an image sensor chip and conductor layers are installed wherein the chip is installed within a sealing frame and wire bonded to the conductor layers.

JP-A-62-248 365 discloses an photoelectric conversion device in which the electrification of a surface is prevented by providing a shielding metallic plate.

The object of the present invention is to prevent a malfunction of an image sensor or an image processing apparatus comprising an image sensor by improving the structure of a supporting member and thereby improving the reliability of the image sensor.

The object of the present invention is achieved by providing an image sensor as set out in claim 1, as well as by providing an information processing apparatus as set out in claim 6.

Other and further objects, features and advantages of the invention will be appear more fully from the following description in connection with the enclosed drawings in which :
Figs. 1A and 1B are schematic views which illustrate a conventional image sensor;
Fig. 2 is a schematic cross sectional view which illustrates the conventional image sensor;
Fig. 3A is a front elevational view which illustrates an embodiment of the image sensor according to the present invention;
Fig. 3B is an enlarged front elevational view which illustrates an essential portion of the same;
Fig. 4 is a schematic cross sectional view which illustrates the embodiment of the image sensor according to the present invention;
Fig. 5A is a schematic view which illustrates the sequential order of an alumite treatment process;
Fig. 5B is a schematic view which illustrates the sequential order of a tapping process;
Fig. 6 is a scheamtic view which illustrates a sequential order of a process of causing the basic surface which is not applied with an alumite coating to appear;
Fig. 7 is a schematic view which illustrates another sequential order of a process of causing the basic surface which is not applied with an alumite coating to appear; and
Fig. 8 is a schematic cross sectional view which illustrates an information processing apparatus according to the present invention;

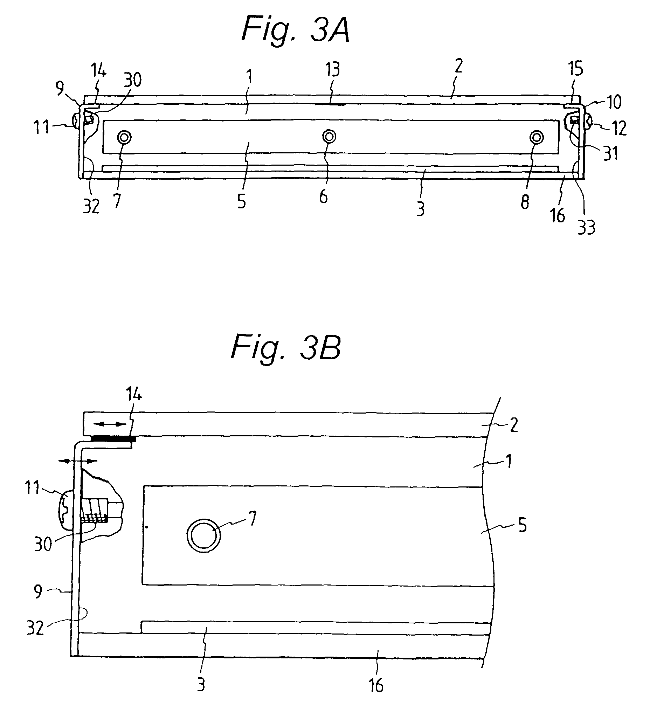

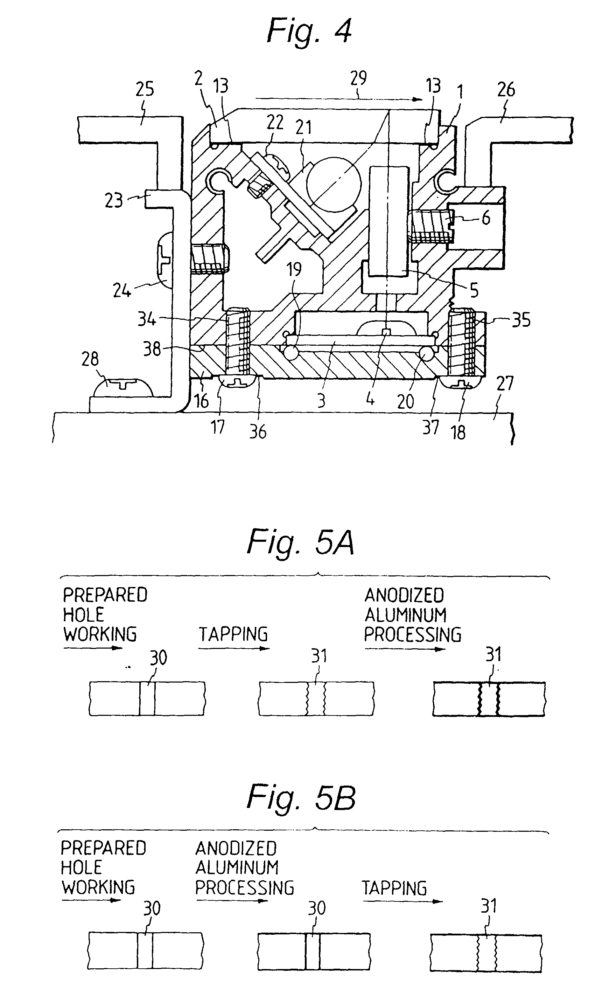

Figs. 3A, 3B and 4 illustrate an embodiment of the invention. Reference numeral 1 represents a frame of a contact type image sensor to which the following elements are fastened: a reading glass 2, a sensor substrate 3 having a sensor device 4 serving as the light receiving device, a SELFOC lens 5 serving as an imaging means, side plates 9, 10 and a bottom plate 16 which are secured to the above-described frame 1 and an LED array 21 serving as the illuminating means. According to this embodiment, the above-described SELFOC lens 5 is secured by lens fixing screws 6, 7 and 8, while the side plates 9 and 10 are secured by side plate fixing screws 11 and 12. In addition, the bottom plate 16 is secured by bottom plate fixing screws 17 and 18. The sensor substrate 3 is, via sensor substrate fixing rubber shafts 19 and 20, held between the frame 1 and the bottom plate 16. In addition, the LED array 21 is secured by an LED array fixing screw 22. The frame 1 is secured to a fastening plate 23 by a fastening plate fixing screw 24, while the fastening plate 23 is secured to an apparatus body 27 by a contact-type image sensor fixing screw 28. Reference numeral 25 represents a fastening plate side original document guide, 26 represents a lens side original document guide and 29 represents an original document.

The above-described frame 1 is formed into its final shape by subjecting an extruded aluminum workpiece to a secondary machining such as a cutting work. In order to prevent the adverse influence upon the internal optical system and preventing the surface oxidation, it subjected to the black alumite treatment. As a result, a non-conductive film is formed on the surface of the frame 1.

The reading glass 2 is chamfered on its original document introduction side so as to prevent the undesirable check of the original document. The side plates 9 and 10 comprise leaf springs made of stainless steel, each of the side plates 9 and 10 being secured to the frame 1 by the side plate fixing -screws 11 and 12. The reading glass 2 is secured to the central portion of the frame 1, the side plates 9 and 10 via the reading glass adhesion layers 13, 14 and 15. The bottom plate 16 is formed into its final shape by cutting the extruded aluminum workpiece and the same is subjected to the alumite treatment in order to prevent the change in the surface condition such as oxidation.

The LED array 21 has a substrate on which an LED chip, a cylindrical lens and the like are mounted. The fastening plate 23 is a steel sheet which is applied with a surface treatment such as nickel plating, tin plating, aluminum plate or the like exhibiting excellent high frequency conductivity in order to prevent the surface condition change such as oxidation and as well as to improve the electrical conductivity.

According to this embodiment, the fastening plate side original document guide 25 serves as a guide plate for smoothly introducing the original document onto the surface of the reading glass 2, the fastening plate side original document guide 25 being secured to the apparatus body 27. The above-described lens side original document guide 26 is, according to this embodiment, arranged to be a guide plate for smoothly discharging the original document from the reading glass 2, the lens side original document guide being secured to the apparatus body 27.

The original document 29 is smoothly introduced onto the surface of the reading glass 2 along the fastening plate side original document guide 25, while the same is discharged from the reading glass 2 along the lens side original document guide 26. At this time, the surface of the original document 29 confronting the reading glass 2 is, on the reading glass 2, illuminated by the light beams emitted from the LED array. As a result, an image written on the original document 29 is imaged on the sensor device 4 by the SELEOC lens 5. Thus, the image is photoelectrically converted by the sensor device 4 before it is amplified on the sensor substrate 3 so as to be transmitted outside of the contact type image sensor.

Since the above-described side plates 9 and 10 are made of stainless steel, thereby they exhibit electrical conductivity. Also the side plate fixing screws 11 and 12 for fixing the side plates 9 and 10 to the frame 1 are made of steel and the same is applied with nickel plating which exhibits excellent electrical conductivity. Since the primary hole 30 for tapping and a thread hole 31 are usually formed in the frame 1 before the alumite treatment is performed, the electrically conductive state is not realized even if screws are directly fastened. According to this embodiment, the tapping primary hole 30 is formed in the frame 1 as shown in Fig. 5B before the alumite treatment is performed. Then, tapping of the frame 1 is performed so that the alumite film is removed in the thread hole 31. As described above, according to this embodiment, an effect can be obtained in that the overall cost can be reduced because the tapping process is arranged to be performed after the alumite treatment in order to establish the electrical conduction.

When screw fixing is performed as described above, an electrical conduction can be established between the frame 1 and the side plates via the side plate fixing screws 11 and 12. If the degree of the electrical conduction established by the side plate fixing screws 11 and 12 is insufficient, the electrically conductive area can be increased by additionally establishing the electrical conduction between the frame 1 and the side plates 9 and 10 via contact surfaces 32 and 33. In this case, the surface of the frame 1 must be arranged in such a manner that the base surface having electrical conductivity must appear in place of the alumite film. The base surface can be allowed to appear outside by the following means:

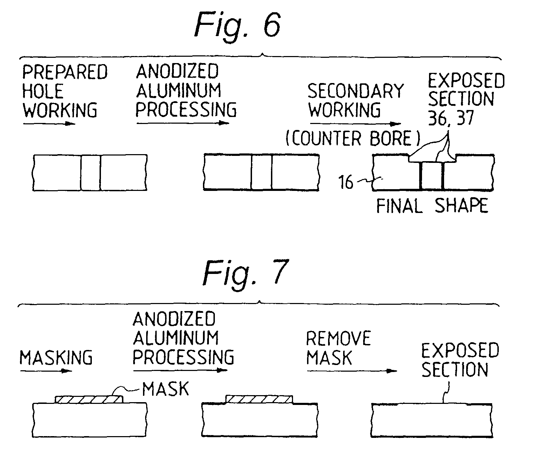

A means shown in Fig. 6 is arranged in such a manner that the frame 1 is first subjected to the alumite treatment before the alumite film is removed in the required portions by a secondary machining. The above-described secondary machining process may comprise a milling process. Furthermore, the removal of the alumite film by tapping as described above is a kind of the secondary machining process.

The above-described machining is characterized by a fact that the shape of the portion in which the base surface is caused to appear outside is changed. Therefore, if the base surface of the subject portion can be caused to appear outside by another secondary machining process performed for another purpose, any special process for causing the base surface to appear outside according to the present invention can be omitted.

A means shown in Fig. 7 is arranged in such a manner that no alumite film is formed in the required portions at the time of the alumite treatment. That is, masking is previously applied to the portion of the frame 1 the base surface of which must appear outside. Then, the mask is removed after the alumite treatment has been completed. As a result, the base surface of the required portion, to which no alumite treatment is applied, appear outside. The above-described masking process is performed by applying a resist or by using a masking tape each of which is not influenced by the alumite treatment.

The above-described machining is characterized in that the shape of the portion, the base surface of which is caused to appear outside, is not changed. Furthermore, an excellent effect can be obtained if it is used to cause a wide area to appear outside.

In any of the above-described machining means, an excellent effect can be obtained in the portion which receives pressure at the time of tightening the screw. That is, the portion around the tapped portion according to this embodiment. It is preferable that the exposed area be wide within the contact surface, more preferably, an area larger than the screw seat contact area.

According to this embodiment, since the bottom plate 16 is made of an aluminum alloy similarly to the frame 1, therefore there is no electrical conductivity. In this case, the bottom plate fixing screws 17 and 18 are, similarly to the above-described structure, made of steel and as well as applied with the nickel plating which exhibits excellent electrical conductivity. Furthermore, the frame 1 is subjected to the alumite treatment after the tapping primary hole has been formed therein. Then, tapping of the tapping primary hole is performed. As a result, the alumite film on the frame 1 is removed in the tapped portions 34 and 35. As for the contact between the bottom plate 16 and the seating surfaces of the bottom plate fixing screws 17 and 18, counter-boring (reference numerals 36 and 37) is performed in the bottom plate 16 after the overall alumite treatment has been performed in order to cause the base surface to appear outside. As a result, an electrical conduction is established between the frame 1 and the bottom plate 16 via the seating surface contact portions 36 and 37 of the bottom plate fixing screws 17 and 18 and the tapping portions 34 and 35. If the necessity of shinking the head portions of the bottom plate fixing screws 17 and 18 into the bottom plate 16 can be eliminated, a masking treatment applied to the subject portion to cause the base surface to appear outside later is employed in place of the counterboring so as to establish the electrical conduction.

In a case where the conductivity established by the bottom plate fixing screws 17 and 18 is insufficient, another electrical conduction is established between the bottom plate 16 and the contact surface 38 to increase the electrically conductive area. In this case, the surface at which the frame 1 and the bottom plate are positioned in contact with each other must be arranged in such a manner that its base surface having electrical conductivity must appear outside by removing the alumite film.

As described above, any one of the above-described means may be employed to cause the base surface to appear outside. An excellent effect can be obtained from the fact that the base surface appears outside in the portion which receives the pressure at the time of tightening the screw. Also according to this embodiment, it is preferable that the exposure range be wide within the contact surface. According to this embodiment, the surface of the fastening plate 23 has electrical conductivity. The means for fastening the fastening plate 23 to the frame 1 is arranged to be similar to the above-described embodiment. The lens fixing screws 6, 7 and 8 for securing elements having no electrical conductivity may be subjected to proper machining/processing order in terms of convenience in manufacturing the contact type image sensor because the sequential order of the non-conductive film forming process and the tapping process may be arbitrarily determined.

According to the above-described embodiments, the side plates are made of stainless steel, the screws are made of steel and the fastening plate is made of a steel plate applied with electrically conductive plating. However, the above-described material may be changed if the surface of the element has the electrical conductivity. For example, the side plate may be made of a steel plate applied with electrically conductive plating and the screws and the fastening plate respectively may be made of stainless steel. As an alternative to this, they may be made of copper or another metal material. Furthermore, a plastic material possessing electrical conductivity because copper dust or carbon dust are mixed may be employed. In addition, a non-conductive plastic applied with electrical conductive plating such as nickel plating may be employed.

Furthermore, the frame may be made of any electrical conductive material in place of the aluminum alloy. In addition, the film on the surface may be formed by another method in place of the alumite treatment if the film is non-conductive.

As described above, according to the present invention, the contact type image sensor is arranged in such a manner that the frame made of an electrical conductive material coated with non-conductive film is employed while arranging the structure in such a manner that an electrical conduction is established between the frame and the members to be fastened to the frame. As a result, electric waves generated in the sensor substrate at the time of the operation of the contact type image sensor can be confined by the frame, the bottom plate, the side plates and the like. Furthermore, generation of the antenna effect can be prevented, causing outward leakage of electric waves to be prevented. Therefore, the radiant noise characteristics will not be deteriorated. Because of the same reason, introduction of external electric wave into the contact type image sensor can be satisfactorily prevented. Therefore, the risk of the unstable operation of the contact type image sensor due to the introduced external electric wave can be overcome.

Furthermore, it is preferable that the optical sensor 4 comprises an elongated optical sensor of the type which is composed of amorphous silicone and which is disclosed in US-A-4,461,956 granted to Hatanaka and the like; the inventor of the present invention because its cost can be reduced and an excellent resolution can be obtained.

Also an optical sensor of a type disclosed in U.S.P. 4,791,469 granted to Omi; the inventor of the present invention or that disclosed in U.S.P 4,810,896 granted to Tanaka; the inventor of the present invention may be employed which is arranged in such a manner that a capacity load is provided for the emitter of a bipolar transistor and an output signal is read by means of voltage. In this case, a plurality of sensor chips are straight or in a zigzag manner disposed on the surface of the ceramic substrate and the same is subjected to passivation by silicone resin or the like.

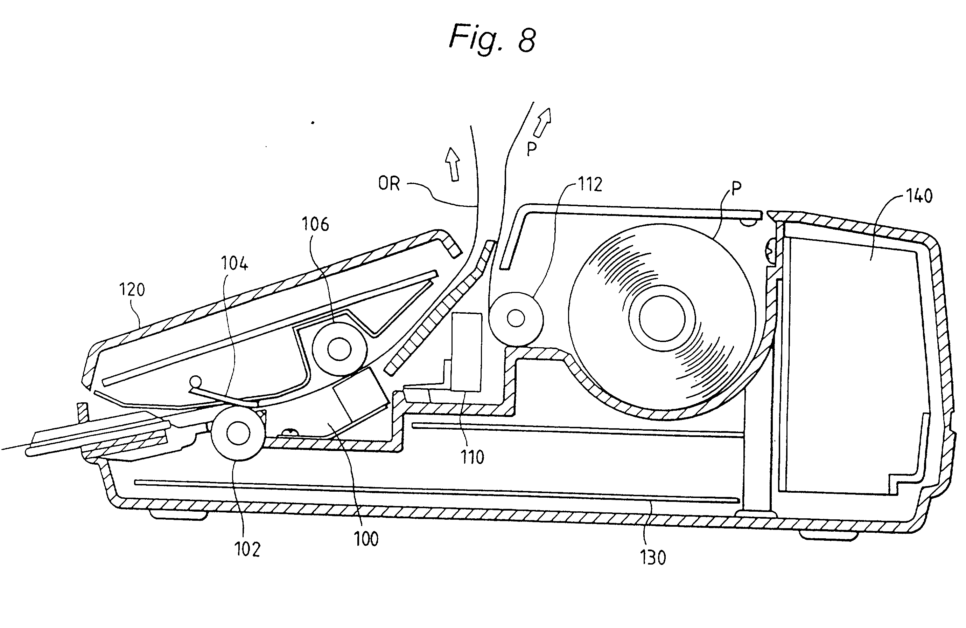

Fig. 8 illustrates an example of a facsimile machine serving as an image information apparatus constituted by using the sensor unit according to this embodiment and having a communication function. Referring to Fig. 8, reference numeral 102 represents a supplying roller serving as a supply means for supplying original document OR toward a reading position. Reference numeral 104 represents a separating member for assuredly and one by one separating and supplying the original document OR. Reference numeral 106 represents a platen roller serving as a conveying means disposed at the reading position with respect to the sensor unit 100 and arranged to restrict the surface of the original document OR to be read and as well as convey the original document OR.

Symbol P represents a recording medium formed into a roll of paper in which image information transmitted from outside is reproduced in a case of image information read by the sensor unit or in a case of a facsimile machine. Reference numeral 110 represents a recording head serving as a recording means for forming the above-described image, the recording head being allowed to comprise a variety of heads such as a thermal head and an ink jet recording head. The recording head according to this embodiment may comprise a serial type recording head or line type recording head. Reference numeral 112 represents a platen roller serving as a conveying means for conveying the recording medium P to the recording position made by the recording head 110 and as well as restricting the surface of the recording medium P to be recorded.

Reference numeral 120 represents an operation panel serving as an input/output means on which switches for receiving operational inputs and display portions for displaying messages and information about the states of the apparatus are disposed.

Reference numeral 130 represents a system control substrate serving as a control means and comprising a control portion (controller) for controlling the operation of each unit, a drive circuit (driver) for driving the photoelectrical conversion device, a processing portion (processor) for processing image information and information transmitting/receiving portion and the like. Reference numeral 140 represents a power source for the apparatus.

It is preferable that the recording means for use in the information processing apparatus according to the present invention comprises a means the representative structure and the principle of which have been disclosed in US-A-4,723,129 or US-A-4,740,796. According to these disclosures, one or more drive signals which correspond to information to be recorded and which cause a rapid temperature rise exceeding nuclear boiling are supplied to an electrothermal converter which is disposed to correspond to a sheet or a liquid passage in which liquid (ink) is held. As a result, thermal energy is generated in the electrothermal converter, causing film boiling to be generated in the heat effective surface of the recording head. Consequently, bubbles can be formed in liquid (ink), one by one, corresponding to the drive signals, causing a significant effect to be obtained. When the bubbles are enlarged/contracted, liquid (ink) is discharged through discharge apertures so that one or more droplet are formed.

Furthermore, in a case where the recording head is a full line type recording head having a length which corresponds to the maximum width of the recording medium which can be recorded by the recording apparatus, a structure may be employed in which a plurality of recording heads disclosed in the above-described disclosures are combined with each other to correspond to the above-described length. Another structure may be employed which has a single recording head constituted by integrating a plurality of heads.

Furthermore, the present invention can be effectively adapted to an interchangeable chip-type recording head which is arranged in such a manner that, when it is mounted on the apparatus body, an electrical connection with the apparatus body or ink supplied from the apparatus body can be enabled. In addition, the present invention can be effectively adapted to a cartridge type recording head in which an ink tank is integrally provided for the body of the recording head.

Although the invention has been described in its preferred form with a certain degree of particularly, it is understood that the present disclosure of the preferred form has been charged in the details of construction and the combination and arrangement of parts may be resorted to without departing from the scope of the invention as claimed.

## Claims

1. An image sensor comprising:
illuminating means (21) for illuminating an image information surface of an original document;
imaging means (5) for imaging light reflected from said image information surface of said original document by said illuminating means;
a light receiving device (4) disposed on the image surface of said imaged reflected light, arranged to photoelectrically convert said reflected light and arranged to receive image information;
a supporting member (1) for integrally holding said illuminating means, said imaging means, and said light receiving device; and
a fixing member (9, 10; 16; 23) for securing said supporting member, wherein
said supporting member is made of an electrically conductive material, an insulating film is formed on the surface of said supporting member, said fixing member includes at least electrically conductive portions and said supporting member and said fixing member are secured in such a manner that an electrical conduction is established between said supporting member and said fixing member.

2. An image sensor according to Claim 1, wherein means for securing said supporting member (1) and said fixing member (9, 10; 16; 23) comprises a screw (11, 12; 17, 18; 24) at least the surface of which is electrically conductive, said supporting member (1) is tapped so that a thread hole which receives said screw is formed in said supporting member in such a manner that said film is removed and an electrical conduction is, on at least the surface of said thread hole, established between said supporting member and said fixing member when said screw is fixed.

3. An image sensor according to Claim 2, wherein said supporting member (1) is arranged in such a manner that a portion of the overall portion of its surface which comes in contact with said fixing member (9, 10; 16; 23) has no film formed thereon and an electrical conduction is, via said contact surface, established between said supporting member and said fixing member.

4. An image sensor according to Claim 3, wherein said contact surface is arranged in such a manner that a mask is previously applied to the surface of said contact surface before said film is formed on the surface of said frame (1) and said mask is removed after said film has been formed.

5. An image sensor according Claim 3 , wherein said contact surface is arranged in such a manner that said film is formed on the surface of said frame (1) and said subject portion is machined.

6. An information processing apparatus on which said image sensor (100) according to any one of Claim 1 to 5 is mounted.

7. An information processing apparatus according to Claim 6, further comprising means (102, 106) for positioning said original document (OR) at a position at which said image sensor (100) reads said original document.

8. An information processing apparatus according to Claim 7, further comprising recording means (110) for recording image information read by said image sensor (100).

9. An information processing apparatus according to Claim 8, wherein said recording means (110) is a recording head which discharges ink by utilizing thermal energy.

## Patentansprüche

1. Bildsensor mit
einer Beleuchtungseinrichtung(21) für ein Bestrahlen einer Bildinformationsfläche eines Originaldokumentes,
einer Abbildungseinrichtung (5) für ein Abbilden von Licht, das von der Bildinformationsfläche des Originaldokumentes durch die Beleuchtungseinrichtung reflektiert worden ist,
einer Lichtaufnahmevorrichtung (4), die an der Bildfläche des abgebildeten reflektierten Lichtes angeordnet ist und so eingerichtet ist, daß sie das reflektierte Licht photoelektrisch umwandelt, und so eingerichtet ist, daß sie eine Bildinformation aufnimmt,
einem Stützelement (1) für ein einstückiges Halten der Beleuchtungseinrichtung, der Abbildungseinrichtung und der Lichtaufnahmevorrichtung und
einem Befestigungselement (9, 10; 16; 23) für ein Sichern des Stützelementes,
wobei das Stützelement aus einem elektrisch leitfähigen Material hergestellt ist, ein Isolationsfilm an der Oberfläche des Stützelementes ausgebildet ist, das Befestigungselement zumindest elektrisch leitfähige Abschnitte aufweist und das Stützelement und das Befestigungselement in einer derartigen Weise gesichert sind, daß eine elektrische Verbindung zwischen dem Stützelement und dem Befestigungselement errichtet ist.

2. Bildsensor gemäß Anspruch 1, wobei
eine Einrichtung für ein Sichern des Stützelementes (1) und des Befestigungselementes (9, 10; 16; 23) eine Schraube (11, 12; 17, 18; 24) aufweist, von der zumindest die Oberfläche elektrisch leitfähig ist, wobei das Stützelement (1) mit einem Gewinde versehen ist, so daß ein Gewindeloch, das die Schraube aufnimmt, in dem Stützelement in einer derartigen Weise ausgebildet ist, daß der Film entfernt ist und eine elektrische Verbindung an zumindest der Oberfläche des Gewindeloches zwischen dem Stützelement und dem Befestigungselement errichtet ist, wenn die Schraube befestigt ist.

3. Bildsensor gemäß Anspruch 2, wobei
das Stützelement (1) in einer derartigen Weise angeordnet ist, daß an einem Abschnitt des Gesamtabschnittes seiner Oberfläche, der mit dem Befestigungselement (9, 10; 16; 23) in Kontakt gelangt, kein Film ausgebildet ist und eine elektrische Verbindung über die Kontaktfläche zwischen dem Stützelement und dem Befestigungselement errichtet ist.

4. Bildsensor gemäß Anspruch 3, wobei
die Kontaktfläche in einer derartigen Weise angeordnet ist, daß eine Maske zuvor an der Oberfläche der Kontaktfläche aufgebracht ist, bevor der Film an der Oberfläche des Rahmens (1) ausgebildet worden ist, und die Maske entfernt wird, nachdem der Film ausgebildet worden ist.

5. Bildsensor gemäß Anspruch 3, wobei
die Kontaktfläche in einer derartigen Weise eingerichtet ist, daß der Film an der Oberfläche des Rahmens (1) ausgebildet wird und der betreffende Abschnitt bearbeitet wird.

6. Informationsverarbeitungsgerät, an dem der Bildsensor (100) gemäß einem der Ansprüche 1 bis 5 montiert ist.

7. Informationsverarbeitungsgerät gemäß Anspruch 6, das des weiteren eine Einrichtung (102, 106) zum Positionieren des Originaldokumentes (OR) an einer Position, an der der Bildsensor (100) das Originaldokument liest, aufweist.

8. Informationsverarbeitungsgerät gemäß Anspruch 7, das des weiteren eine Aufzeichnungseinrichtung (110) zum Aufzeichnen der durch den Bildsensor (100) gelesenen Bildinformation aufweist.

9. Informationsverarbeitungsgerät gemäß Anspruch 8, wobei
die Aufzeichnungseinrichtung (110) ein Aufzeichnungskopf ist, der Tinte unter Verwendung von Wärmeenergie ausstößt.

## Revendications

1. Capteur d'image comprenant :
un moyen (21) d'éclairage destiné à éclairer une surface d'information d'image d'un document d'origine ;
un moyen (5) de formation d'image destiné à former une image de la lumière réfléchie à partir de ladite surface d'information d'image dudit document d'origine par ledit moyen d'éclairage ;
un dispositif (4) de réception de lumière disposé sur la surface d'image de ladite lumière réfléchie mise en image, agencé pour convertir photoélectriquement ladite lumière réfléchie et agencé pour recevoir de l'information d'image ;
un élément (1) de support destiné à maintenir d'un seul tenant ledit moyen d'éclairage, ledit moyen de formation d'image et ledit dispositif de réception de lumière ; et
un moyen (9, 10 ; 16 ; 23) de fixation destiné à fixer ledit élément de support, dans lequel
ledit élément de support est constitué d'une matière conductrice de l'électricité, un film isolant est formé sur la surface dudit élément de support, ledit élément de fixation comprend au moins des parties conductrices de l'électricité et ledit élément de support et ledit élément de fixation sont fixés de façon qu'une conduction électrique soit établie entre ledit élément de support et ledit élément de fixation.

2. Capteur d'image selon la revendication 1, dans lequel un moyen destiné à fixer ledit élément (1) de support et ledit élément (9, 10 ; 16 ; 23) de fixation comprend une vis (11, 12 ; 17, 18 ; 24) dont au moins la surface est conductrice de l'électricité, ledit élément (1) de support est taraudé de sorte qu'un trou taraudé qui reçoit ladite vis est formé dans ledit élément de support de façon que ledit film soit retiré et qu'une conduction électrique soit établie, au moins au niveau de la surface dudit trou taraudé, entre ledit élément de support et ledit élément de fixation lorsque l'on fixe ladite vis.

3. Capteur d'image selon la revendication 2, dans lequel ledit élément (1) de support est agencé de façon qu'une partie de toute la partie de sa surface qui vient en contact avec ledit élément (9, 10 ; 16 ; 23) de fixation ne comporte pas de film formé sur celle-ci, et qu'une conduction électrique soit établie, via ladite surface de contact, entre ledit élément de support et ledit élément de fixation.

4. Capteur d'image selon la revendication 3, dans lequel ladite surface de contact est agencée de façon qu'un masque soit appliqué au préalable à la surface de ladite surface de contact avant de former ledit film sur la surface dudit châssis (1) et que ledit masque soit retiré après formation dudit film.

5. Capteur d'image selon la revendication 3, dans lequel ladite surface de contact est agencée de façon que ledit film soit formé sur la surface dudit châssis (1) et que ladite partie en question soit usinée.

6. Appareil de traitement d'information sur lequel est monté ledit capteur (100) d'image selon l'une quelconque des revendications 1 à 5.

7. Appareil de traitement d'information selon la revendication 6, comprenant en outre un moyen (102, 106) servant à placer ledit document d'origine (OR) à une position à laquelle ledit capteur (100) d'image lit ledit document d'origine.

8. Appareil de traitement d'information selon la revendication 7, comprenant en outre un moyen (110) d'enregistrement destiné à enregistrer de l'information d'image lue par ledit capteur (100) d'image.

9. Appareil de traitement d'information selon la revendication 8, dans lequel ledit moyen (110) d'enregistrement est une tête d'enregistrement qui décharge de l'encre en utilisant de l'énergie thermique.
